# EUROPEAN PATENT APPLICATION

(11) **EP 1 763 233 A2**
(43) Date of publication of application: **14.03.2007**
(21) Application number: 06011203.4
(22) Date of filing: 31.05.2006
(51) Int. Cl.: H04N 5/445, H04N 7/16

(54) **Method of providing viewing history information in a digital broadcast receiving terminal**

(30) Priority: 13.09.2005 KR 20050085268
(71) Applicant: Samsung Electronics Co., Ltd., Suwon-si, Gyeonggi-Do (KR)
(72) Inventor: Kim, Joo-Sub Samsung Electronics Co., Ltd., Suwon-si Gyeonggi-do (KR); Lee, Seok-Hoon Samsung Electronics Co., Ltd., Suwon-si Gyeonggi-do (KR)
(74) Representative: Lang, Johannes

(57) **Abstract**

A method of providing viewing history information in a digital broadcast receiving terminal is provided. Viewing history information of digital programs received on a plurality of broadcast channels and output to a user is generated and stored. Upon receipt of a request for outputting the viewing history information from the user, the stored viewing history information is displayed.

## Description

### BACKGROUND OF THE INVENTION

### 1. Field of the Invention

The present invention relates generally to a digital broadcast receiving terminal, and in particular, to a method of providing a user's viewing history of digital broadcast programs in a digital broadcast receiving terminal.

### 2. Description of the Related Art

Digital broadcasting provides high-definition, high-quality and improved broadcasting service, as compared to traditional analog broadcasting. The digital broadcasting is classified into satellite digital broadcasting and terrestrial digital broadcasting.

Satellite digital broadcasting is mainly operative in a mobile service. Thus it enables viewing of multichannel, multimedia broadcasting through a portable receiver (mobile phone or Personal Digital Assistant (PDA)) or a vehicular receiver, irrespective of time and place.

The concept of terrestrial digital broadcasting originated from Digital Audio Broadcasting (DAB), and provides mobile multimedia broadcasting through a currently available vacant channel, VHF channel 12. It transmits television broadcasting, radio broadcasting and data broadcasting on a plurality of channels. While a conventional terrestrial broadcasting service provider operates a single analog channel, a digital broadcasting service provider operates a plurality of channels. A digital data stream with various embedded services is called an ensemble.

Along with the development of digital broadcasting technology and mobile communication technology, there has recently been an increasing interest in a digital broadcasting service that allows users to view digital broadcasting while moving. Particularly, Digital Multimedia Broadcasting (DMB) through a mobile terminal is increasing in popularity.

Digital broadcasting content providers offer a variety of contents by digital broadcasting service. The contents include paid programs (e.g. adult programs) for which subscribers are charged per time.

As more subscribers use paid programs, a need exists for providing their program viewing histories listing the programs that they have watched and the viewing time of the programs.

Owing to the proliferation of mobile terminals irrespective of gender and age, there has been an increase in minor-aged children who indiscreetly view adult programs through mobile handsets. Accordingly, there exists a need for a method of enabling parents to effectively manage indiscreet digital broadcasting viewing of their minor-aged children.

### SUMMARY OF THE INVENTION

An object of the present invention is to substantially solve at least the above problems and/or disadvantages and to provide at least the advantages below. Accordingly, the present invention provides a method of providing a user viewing history of digital broadcast programs in a digital broadcast receiving terminal.

The present invention also provides a method of effectively managing indiscreet viewing of digital broadcast programs through a digital broadcast receiving terminal.

According to the present invention, in a method of providing viewing history information in a digital broadcast receiving terminal, viewing history information of digital programs received on a plurality of broadcast channels and output to a user is generated and stored. Upon receipt of a request for outputting the viewing history information from the user, the stored viewing history information is displayed.

Preferably, upon receipt of a request for deleting the viewing history information, the user is prompted to enter a password, after which the viewing history information is deleted.

According to the present invention, in a method of providing viewing history information in a digital broadcast receiving terminal, viewing history information of digital broadcast programs which have been received on a plurality of broadcast channels and output to a user, is generated and stored. The viewing history information is transmitted to a recipient.

Preferably, if the user requests transmission of the viewing history information, the user is prompted to enter a recipient. When the recipient is entered, the stored viewing history information is transmitted to the recipient.

### BRIEF DESCRIPTION OF THE DRAWINGS

The above and other objects, features and advantages of the present invention will become more apparent from the following detailed description when taken in conjunction with the accompanying drawings in which:
FIG. 1 is a block diagram of a digital broadcast receiving terminal according to the present invention;
FIG. 2 is a flowchart illustrating an operation of the digital broadcast receiving terminal according to the present invention;
FIG. 3 is a detailed flowchart illustrating an operation for creating and storing viewing history information in the operation illustrated in FIG. 2; and
FIG. 4 is a flowchart illustrating an operation of the digital broadcast receiving terminal according to the present invention.

### DETAILED DESCRIPTION OF THE PREFERRED EMBODIMENTS

Preferred embodiments of the present invention will be described herein below with reference to the accompanying drawings. In the following description, well-known functions or constructions are not described in detail, for the sake of clarity and conciseness.

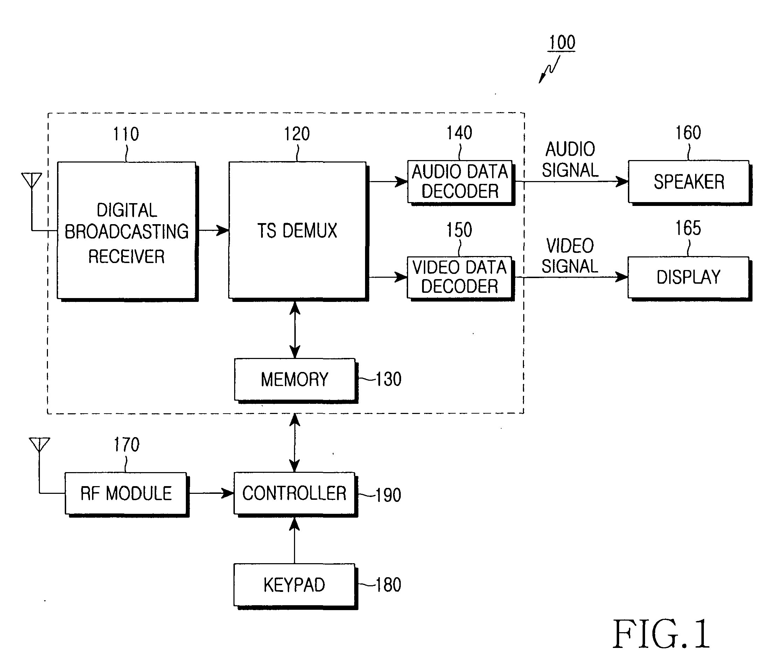

FIG. 1 is a block diagram of a digital broadcast receiving terminal according to the present invention.

Referring to FIG. 1, the terminal 100 for receiving digital broadcasts includes a digital broadcasting receiver 110, a Transport Stream (TS) demultiplexer (DEMUX) 120, a memory 130, an audio data decoder 140, a video data decoder 150, a speaker 160, a display 165, a Radio Frequency (RF) module 170, a keypad 180 and a controller 190.

The digital broadcasting receiver 110 receives digital broadcasting data on a particular channel selected by a user, and demodulates the digital broadcasting data to a digital data stream under the control of the controller 190. The digital broadcasting receiver 110 may include a demodulator (not shown) for demodulating the digital broadcasting data to the digital data stream. The TS DEMUX 120 demultiplexes the digital data stream into an audio data stream and a video data stream.

The memory 130 stores information required for controlling the operation of the terminal 100 and viewing history information of digital broadcast programs that the user has watched on multiple broadcast channels under the control of the controller 190. The memory 130 also stores Electronic Program Guide (EPG) data with information about digital broadcast programs received through the digital broadcasting receiver 110.

The audio data decoder 140 decodes the audio data stream received from the TS DEMUX 120 to an analog audio signal and outputs the analog audio signal through the speaker 160.

The video data decoder 150 decodes the video data stream received from the TS DEMUX 120 to an analog video signal and displays the analog video signal on the display 165. The speaker 160 and the display 165 function as an output portion in the terminal 100. The display 165 outputs a variety of video data generated from the terminal 100. It is preferably configured to have a Liquid Crystal Display (LCD) that sufficiently supports the resolution of digital broadcasting data. If the LCD is implemented in a touch screen fashion, the display 165 can serve as an input portion.

The RF module 170 is responsible for transmission and reception of audio data, text data, video data and control data under the control of the controller 190. For this purpose, the RF module 170 includes an RF transmitter (not shown) for up-converting the frequency of a transmission signal and amplifying the upconverted signal, and an RF receiver (not shown) for low-noise amplifying a received signal and downconverting the frequency of the low-noise-amplified signal. While not shown, the RF module 170 may have a MODEM comprised of a transmitter for encoding and modulating the transmission signal and a receiver for demodulating and decoding the received signal.

The keypad 180 provides key input data or voice input data corresponding to a user-pressed key or user-uttered voice to the controller 190.

The controller 190 provides overall control to the terminal 100 according to the present invention. The controller 190 also creates the viewing history information of digital broadcast programs received on multiple channels and output to the user, and stores it in the memory 130. The viewing history information contains information about the channel numbers, titles, and viewing start and end time of broadcast programs. The controller 190 can set the viewing history information in the Event Information Table (EIT) data of EPG data. The EIT data includes information about all programs to be broadcast on a plurality of digital multimedia broadcasting channels. The broadcast program information contains information about the digital broadcasting channels, titles, and viewing start and end time of broadcast programs.

The controller 190, upon request for outputting a viewing history from the user, displays the viewing history information stored in the memory 130 on the display 165. The output request can be made by a Menu key or a separately designated key. Upon request for deleting the viewing history from the user, the controller 190 prompts the user to enter a preset password, after which it controls the viewing history to be deleted. The deletion request deletes the viewing history displayed on the display 165 or the entire viewing history from the memory 130.

Meanwhile, the controller 190 can control the viewing history stored in the memory 130 to be transmitted to a recipient, preferably by a short message or e-mail. It is also preferred that after the transmission, the viewing history is deleted from the memory 130. The controller 190 can periodically transmit the viewing history to the recipient. The recipient can be selected by the user.

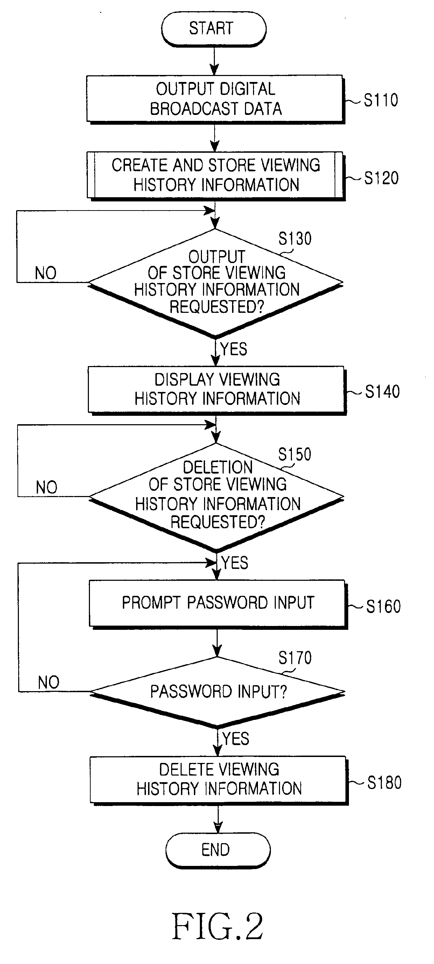

FIG. 2 is a flowchart illustrating an operation of the digital broadcast receiving terminal according to the present invention.

Referring to FIGs. 1 and 2, the controller 190 receives digital broadcasting data on a user-selected channel (e.g. selected by key input) through the digital broadcasting receiver 110 and outputs it to the speaker 160 and the display 165 in step S110.

In step S120, the controller 190 creates viewing history information of the output digital broadcast program and stores the viewing history information in the memory 130. The viewing history information may indicate the channel number, title, and viewing start and end time of the digital broadcast program, and updates existing viewing history information in the memory 130.

The controller 190 determines whether the user has requested output of the viewing history information in step S 130. The user can make the output request by pressing the Menu key or a separately designated key through the keypad 180.

Upon receipt of the output request, the controller 190 retrieves the viewing history information from the memory 130 and displays it on the display 165 in step S 140. Preferably, the controller 190 displays the updated viewing history information by date on the display 165.

The controller 190 determines whether the user has requested deletion of the viewing history information when the Menu key is pressed in step S150. The deletion request may be limited to the displayed viewing history information or it may be the entire viewing history information stored in the memory 130. Alternatively, a specific portion of the viewing history information can be deleted.

Upon receipt of the deletion request, the controller 190 prompts the user to enter a preset password, for protection of the viewing history information in step S160. The prompt can be a voice message or a text message. In step S 170, the controller 190 monitors input of the password. Upon receipt of the password, the controller 190 deletes the viewing history information in step S 180.

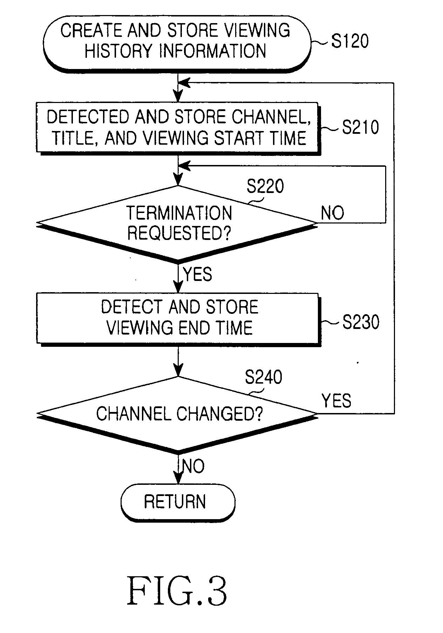

FIG. 3 is a detailed flowchart illustrating step S120 for creating and storing the viewing history information in the procedure illustrated in FIG. 2.

Referring to FIGs. 1 and 3, the controller 190 stores the user-selected channel number and the title and viewing start time of the current digital broadcast program in the memory 130 in step S210. This information can be detected from the EIT data of EPG data. The controller 190 determines whether the user has requested termination of the current digital broadcast program through the speaker 160 and the display 165 in step S220. Upon receipt of the termination request, in step S230 the controller 190 discontinues outputting the digital broadcast program, detects the end time of the digital broadcast program, and writes the end time in the area of the memory 130 where the channel number, the program title, and the viewing start time have previously been stored in step S210. In step S240, the controller 190 determines whether the user has requested a channel change. The user can select a desired channel by a digit key in the keypad 180.

Upon receipt of the channel change request, the controller 180 returns to step S210. If the current channel is kept unchanged, the controller 190 returns to step S 130 of FIG. 2.

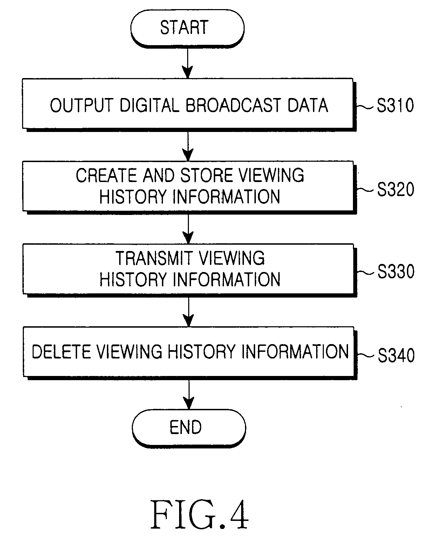

FIG. 4 is a flowchart illustrating an operation of the digital broadcast receiving terminal according to the present invention.

Referring to FIGs. 1 and 4, the controller 190 receives digital broadcasting data on a user-selected channel (e.g. selected by key input) through the digital broadcasting receiver 110 and outputs it to the speaker 160 and the display 165 in step S310.

In step S320, the controller 190 creates viewing history information of the output digital broadcast program and stores the viewing history information in the memory 130. The viewing history information may indicate the channel number, title, and viewing start and end time of the digital broadcast program, and updates existing viewing history information in the memory 130. The detailed description of step S320 has been previously provided in FIG. 3.

The controller 190 transmits the stored viewing history information to a recipient, preferably by a short message or e-mail in step S330. The short message is preferably configured to have fields for writing a broadcast channel number, a program title, and a program viewing start and end time.

The transmission of the viewing history information to the recipient can be periodic. The recipient can be selected by the user. That is, upon request for transmission of the viewing history information from the user, the controller 190 prompts the user to enter a recipient and transmits the stored viewing history information to the recipient. In step S340, the controller 190 deletes the viewing history information from the memory 130.

In accordance with the present invention as described above, a viewing history of digital broadcast programs watched by a user is provided, so that the user can keep and manage the viewing history information effectively.

In addition, the viewing history can be periodically transmitted to a recipient. Hence, even though a minor may view paid programs such as adult programs, the viewing history is easily known and the minor's indiscreet viewing of digital broadcast programs can be effectively controlled.

While the invention has been shown and described with reference to certain preferred embodiments thereof, it will be understood by those skilled in the art that various changes in form and details may be made therein without departing from the spirit and scope of the invention as defined by the appended claims.

## Claims

1. A method of providing viewing history information in a digital broadcast receiving terminal, comprising the steps of:
generating and storing viewing history information of digital programs received on a plurality of broadcast channels and output to a user; and
displaying the stored viewing history information, upon receipt of a request for outputting the viewing history information from the user.

2. The method of claim 1, wherein the viewing history information includes information about a channel number, title, and viewing start and end time of a broadcast program.

3. The method of claim 1, further comprising:
prompting, upon receipt of a request for deleting the viewing history information, the user to enter a password; and
deleting the viewing history information, upon receipt of the password.

4. The method of claim 1, wherein the step of generating and storing the viewing history information comprises the steps of:
(1) detecting a channel number selected by the user, a title of a current output digital broadcast program, and a viewing start time of the digital broadcast program and storing the detected channel number, title, and viewing start time of the digital broadcast program; and
(2) detecting a viewing end time of the digital broadcast program and storing the viewing end time, upon receiving termination of the digital broadcast program.

5. The method of claim 4, further comprising the step of repeating steps (1) and (2), if a broadcast channel is changed upon request of the user.

6. A method of providing viewing history information in a digital broadcast receiving terminal, comprising the steps of:
generating and storing viewing history information of digital broadcast programs received on a plurality of broadcast channels and output to a user; and
transmitting the viewing history information to a recipient.

7. The method of claim 6, further comprising deleting the viewing history information.

8. The method of claim 6, wherein the transmission step comprises transmitting the viewing history information by a short message or e-mail.

9. The method of claim 6, wherein the transmission step comprises periodically transmitting the viewing history information to the recipient.

10. The method of claim 6, further comprising:
prompting the user to enter a recipient, upon receipt of a request for transmission of the viewing history information; and
transmitting, upon receipt of the recipient, the stored viewing history information to the recipient.

11. The method of claim 10, wherein the stored viewing history information is transmitted to the recipient by a short message or e-mail.

12. The method of claim 10, further comprising deleting the viewing history information.

13. The method of claim 6, wherein the step of generating and storing the viewing history information comprises:
(a) detecting a channel number selected by the user, a title of a current output digital broadcast program, and a viewing start time of the digital broadcast program and storing the detected channel number, title, and viewing start time of the digital broadcast program; and
(b) detecting a viewing end time of the digital broadcast program and storing the viewing end time, upon receiving termination of the digital broadcast program.

14. The method of claim 13, further comprising repeating steps (a) and (b), if a broadcast channel is changed upon request of the user.
